# Europäisches Patentamt
## European Patent Office
## Office européen des brevets

(19)

(11) Veröffentlichungsnummer: **0 090 372**
**A1**

(12) ## EUROPÄISCHE PATENTANMELDUNG

(21) Anmeldenummer: **83102989.7**

(22) Anmeldetag: **25.03.83**

(51) Int. Cl.³: **B 08 B 3/04,** B 29 C 29/00

(30) Priorität: **25.03.82 DE 3210976**

(43) Veröffentlichungstag der Anmeldung: **05.10.83**
**Patentblatt 83/40**

(84) Benannte Vertragsstaaten: **AT BE CH DE FR GB IT LI LU NL SE**

(71) Anmelder: **AluPlast GmbH, Ostrampe, D-5440 Mayen (DE)**

(72) Erfinder: **Buzga, Heinrich, Ing.-grad., Höderlinstrasse 4, D-4048 Grevenbroich (DE)**
Erfinder: **Eschelbach, Bernd, Dipl.-Ing., Eupener Str. 3, Eynatten (BE)**

(74) Vertreter: **Patentanwälte Zellentin, Zweibrückenstrasse 15, D-8000 München 2 (DE)**

(54) **Waschvorrichtung und Verfahren zum Waschen von Kunststoffkleinteilen.**

(57) Vorrichtung und Verfahren zum Reinigen von Granulaten oder Kunststoff-Folienschnitzeln.

Dabei wird das zu reinigende Gut in einer Zone hoher Stoffkonzentration (1) mit Hilfe von schnellaufenden Rührern (6) mit hoher mechanischer Energie beaufschlagt, wonach sie rasch in eine Zone geringerer Stoffkonzentration (2) überführt und an deren Oberfläche abgezogen werden.

EP 0 090 372 A1

ACTORUM AG

0090372

PATENTANWÄLTE
ZELLENTIN
ZWEIBRÜCKENSTR. 15
8000 MÜNCHEN 2

Firma AluPlast GmbH,                          25. März 1983
Ostrampe,
5440 Mayen
Bundesrepublik Deutschland

Waschvorrichtung und Verfahren zum

Waschen von Kunststoffkleinteilen

Die vorliegende Erfindung betrifft eine Vorrichtung zum Waschen von vorzugsweise Granulaten oder vorzerkleinerten Folien.

Bekannt sind Vorrichtungen zum Reinigen von Folienschnitzeln, bei denen in einer Waschkufe mit in Transportrichtung liegender Rührwelle Schnitzel und Waschflüssigkeit in turbulente Bewegung versetzt werden. Die leichten gewaschenen Teilchen schwimmen nach der Waschbehandlung auf und werden ausgangs der Waschkufe oben abgezogen und einer Trocknung zugeführt. (Siehe z.B. DE-PS 25 25 750)

Die Reinigungswirkung der bekannten Vorrichtungen befriedigt jedoch nicht.

Aufgabe der vorliegenden Erfindung ist es, die Reinigungswirkung dieser Vorrichtungen zu verbessern. An die Reinheit der gewaschenen Granulate oder Folienschnitzel werden sehr hohe Anforderungen gestellt. Diese aus Abfällen gewonnenen Granulate oder Folienschnitzel sollen einer erneuten Verwendung im Abfall-Recycling zugeführt werden, woraus sich die hohen Anforderungen an die Reinheit erklären. Geringste Schmutzanteile führen zu Inhomogenitäten in daraus hergestellten Erzeugnissen.

Die erfindungsgemäße Vorrichtung besteht aus einem Behälter, der mit Waschflüssigkeit befüllbar ist und darin angeordnetem Rührwerk. Dabei ist der Behälter in eine Eintrags- und Beruhigungszone unterteilt.

Die Eintragsstufe weist ein deutlich geringeres Volumen auf als die Beruhigungszone und besitzt mindestens ein schnell laufendes Rührwerk. Beide sind durch einen Schieber voneinander getrennt.

Durch hohe Stoffkonzentration ist dabei dafür gesorgt, daß der gesamte Inhalt der Eintragstufe durch den (die) schnelllaufenden Rührer in hohe Turbulenz versetzt werden können, die Bildung stationärer Wirbel ohne Beeinflussung von Randzonen ist ausgeschlossen.

Da somit verhältnismäßig wenig Waschflüssigkeit die zu reinigenden Teilchen umgibt, können die Rührflügel außerdem direkt mit mechanischer Energie in Form von Impulsen auf die Teilchen einwirken, sie können den Schlägen der Rührflügel nicht ausweichen.

Darüberhinaus bewirkt die hohe mechanische Energie auch eine gute Benetzung der Teilchen.

Das Rührwerk kann dabei aus einem oder mehreren im wesentlichen parallel zur Waschflüssigkeitsoberfläche angeordneten
Rührern bestehen.

Die nach unten abschwimmenden gereinigten Teilchen gelangen
durch eine vom Schieber gebildete Öffnung in die Beruhigungszone. Dabei tritt eine rasche Verdünnung der den Schmutz in
relativ hoher Konzentration tragenden Waschflüssigkeit auf.

Schmutz und Kunststoffteilen weisen unterschiedliche spezifische Gewichte auf. Bei Verwendung von Waschflüssigkeiten
mit dazwischenliegendem spezifischem Gewicht, können die in
der Regel leichteren Kunststoffteilchen nach oben abschwimmen.
Der spezifisch schwerere Schmutz sinkt nach unten    und wird
ausgetragen.

Die Kunststoffteilchen werden an der Oberfläche abgezogen.

Durch die rasche Verdünnung der verschmutzten Flüssigkeit
ist den Schmutzteilchen die Möglichkeit genommen, sich wieder
an die Kunststoffteilchen anzulagern, wodurch sich auch die
hohe Reinigungswirkung erklären läßt.

Vorzugsweise unterteilt der Schieber die beiden Abschnitte
Eintragstufe und Beruhigungszone schräg in einem von oben nach
unten eine Verengung der Eintragstufe bewirkenden Winkel.

Auf diese Weise kann in Zusammenwirken mit dem Schieber ein
genaues Abstimmen des Materialflusses auf die jeweiligen
Reinigungsbedingungen erfolgen.

Eine automatische Regulierung kann dabei durch die Leistungsaufnahmemessung des Rührwerksmotors und davon abhängiger Steuerung des Schiebers bewirkt werden.

Bei manchen Materialien kann es zudem zweckmäßig sein, über das Rührwerk Luft einzutragen und mit Hilfe anhaftender Luftbläschen durch Flotation das Aufschwimmen der gewaschenen Teilchen zu erleichtern.

Die beste Reinigungswirkung wird dann erzielt, wenn das Volumen der Einrührstufe derart gering, bzw. die Stoffkonzentration in ihr derart groß ist, daß nicht nur die mechanische Ernergie des Rührwerks mit hohem Wirkungsgrad ausgenutzt werden kann, sondern auch die Teilchen ständig aneinander reiben. Dabei empfiehlt es sich, das Rührwerk unterhalb des Flüssigkeitsspiegels anzuordnen.

Der Austrag der gereinigten Kunststoffteilchen kann im einfachsten Falle ein Überlaufwehr sein.

Der Austrag des oben schwimmenden Materials kann auch durch eine Austragswalze vorgenommen werden, wobei die Teilchen über ein Sieb zur Vorentwässerung geführt werden.

Die Schaufeln der Austragswalze können gelocht ausgebildet sein, wodurch ebenfalls eine Vorentwässerung bewirkt wird.

Um den Waschflüssigkeitspegel kontrollieren und regeln zu können, wird vorgeschlagen, am Boden der Vorrichtung einen Schwanenhalsablauf anzuordnen.

Der Frischwassereintrag wird vorzugsweise im Gegenstrom zu den Kunststoffteilchen geführt, wobei die saubersten, also in der Beruhigungszone oben schwimmenden Teilchen mit frischer Waschflüssigkeit beaufschlagt werden.

Bei sehr stark verschmutzten Teilchen kann die vorbeschriebene Vorrichtung allein nicht ausreichend sein. Es empfiehlt sich dann der Einsatz einer zusätzlichen Nachwaschstufe.

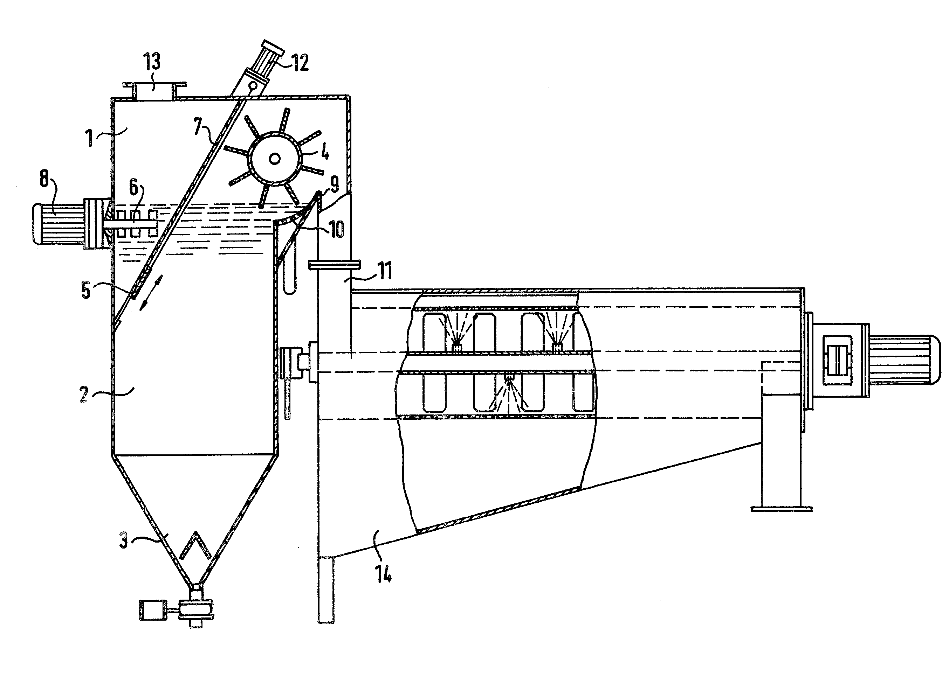

Anhand der beiliegenden Figur wird die vorliegende Erfindung näher beschrieben.

Das Waschbehältnis besteht aus den beiden Teilen Eintragsstufe 1 mit Materialeinlaß 13 und Beruhigungszone 2. Am Boden befindet sich der Ablauf 3, wobei die hier ablaufende Flüssigkeitsmenge der zugeführten natürlich entsprechen muß. An der Badoberfläche der Beruhigungszone 2 befindet sich der Austrag 4, der hier als Walze mit umlaufenden Schaufeln dargestellt ist. Gegebenenfalls genügt auch ein Überlauf 9, über den das gereinigte Material über das Fallrohr 11 ausgetragen wird. Der Schieber 5 unterteilt die Vorrichtung in die Eintragsstufe 1 und die Beruhigungszone 2. Er kann von Hand aber auch von einem Motor 12 angetrieben sein. Das Rührwerk in der Eintragstufe 1 besteht aus dem Rührer 6 und dem Motor 8. Dieser ist so ausgelegt, daß er hohe Tourenzahlen auch bei hoher Stoffkonzentration zuläßt. Unterhalb der Austragswalze 4 ist zweckmäßigerweise ein Sieb 10 angeordnet, über das das ausgetragene Material vorentwässert werden kann.

Für die Reinigung besonders stark verschmutzter Teilchen kann es unumgänglich sein, eine Nachwaschstufe 3 anzuschließen.

Die Funktion der Vorrichtung ist dabei folgende.

Über den Materialeinlaß 13 gelangen die zu reinigenden Teilchen - hier beispielsweise Kunststoff-Folienschnitzel - in einen vorzugsweise nach unten enger werdenden Raum  in die Eintragstufe 1. Hier werden die Schnitzel in eine Waschflüssigkeit eingerührt. Die Waschflüssigkeit hat dabei zweckmäßigerweise ein höheres spezifisches Gewicht als die Schnitzel. Oberflächenaktive Mittel - Tenside, waschaktive Substanzen - können darin gelöst sein.     Als Lösungsmittel ist Wasser zu bevorzugen.

Die Schnitzel gelangen in ein Bad mit hoher Turbulenz bei gleichzeitig geringem Waschflüssigkeitsvolumen. Die Turbulenz wird erzeugt von einem oder mehreren schnell laufenden Rührwerken. Wegen des geringen Volumens gelingt es den Schnitzeln nicht, den "Schlägen" des Rührwerks mit Hilfe der Flüssigkeit auszuweichen. Damit ist dafür gesorgt, daß der Wirkungsgrad der mechanischen Einwirkung hoch ist. Gleichzeitig sind die Teilchen ständig dazu gezwungen aneinander zu reiben, wodurch die Lösungswirkung des Waschmittels unterstützt und ein effektiver Stofftransport bewirkt wird. Die Schnitzel werden beim Verlassen dieser Zone hoher Turbulenz durch eine relativ enge verstellbare Öffnung gezwungen und gelangen so beschleunigt,zusammen mit dem den Schmutz tragenden Lösungsmittel, in die nahezu strömungsfreie Beruhigungszone 2. Durch den Fortfall der Turbulenz haben die Teilchen nunmehr eine nur sehr geringe Relativgeschwindigkeit zueinander, was zusammen mit der schlagartigen Verdünnung der Feststoffkonzentration im Waschmittel ein Wiederverschmutzen auschließt.

Die Kunststoffschnitzel schwimmen dann nach oben weg und werden ausgetragen. Der Schmutz sinkt (langsam) nach unten ab und verläßt das Gefäß durch den Bodenablauf.

Selbstverständlich ist es auch möglich, die Verhältnisse bei gegebenen Komponenten umzukehren, wenn nämlich das rückzugewinnende Material spezifisch schwerer als die Verunreinigung oder eine andere abzutrennende Komponente ist. Dann befindet sich das gewünschte Material im Bodenablauf.

Bei manchen Stoffen kann es auch erforderlich sein, das Aufschwimmen der leichteren Komponente zu verbessern. Dazu ist es möglich, die Teilchen gleichzeitig mit dem Einrühren zu begasen. Die anhaftenden Gasblasen bewirken dann ein beschleunigtes Aufsteigen.

Die Einstellung des spezifischen Gewichtes der Waschflüssigkeit kann auf einfache Weise durch Zugabe löslicher Salze ($CaCl_2$) zu z.B. Wasser vorgenommen werden.

PATENTANWÄLTE
ZELLENTIN        _1_
ZWEIBRÜCKENSTR. 15
8000 MÜNCHEN 2

Firma AluPlast GmbH,                    25. März 1983
Ostrampe,                               Eu 83 179
5440 Mayen                              K/fr
Bundesrepublik Deutschland

Patentansprüche

1.)  Vorrichtung zum Waschen, vorzugsweise von Granulaten oder
     vorzerkleinerten Folien, bestehend aus einem Behälter
     für Waschflüssigkeit mit darin angeordneter Rührvorrichtung, dadurch gekennzeichnet, daß der Behälter in
     eine Eintragstufe (1) und eine Beruhigungszone (2) mit
     Bodenablauf (7) und oben angeordneter Austragsvorrichtung
     (4) unterteilt ist, wobei Eintragstufe  und Beruhigungszone durch einen Schieber (5) unterteilt sind und in der
     Eintragstufe mindestens ein schnell laufender Rührer (6)
     angeordnet ist und daß die Eintragstufe im Verhältnis
     zur Beruhigungszone ein deutlich geringeres Volumen aufweist.

2.)  Vorrichtung nach Anspruch 1, dadurch gekennzeichnet,
     daß der Schieber am unteren Ende eines die Eintragstufe
     und die Beruhigungszone schräg unterteilenden Trennbleches (7) angeordnet ist.

3.) Vorrichtung nach Anspruch 1 und 2, dadurch gekennzeichnet, daß der Schieber über die Leistungsaufnahme des
Rührmotors (8) gesteuert ist.

4.) Vorrichtung nach Anspruch 1 - 3, dadurch gekennzeichnet,
daß der Rührer (6) zwecks flotierender Trennung als Begasungsrührer ausgebildet ist.

5.) Vorrichtung nach Anspruch 1 - 3, dadurch gekennzeichnet,
daß das Rührwerk unterhalb des Flüssigkeitsspiegels
angeordnet ist und das Volumen der Einrührstufe derart
klein ausgelegt ist, daß durch hohe Stoffkonzentration
und hohe Rührenergie das zu waschende Gut aneinander
reibt.

6.) Vorrichtung nach Anspruch 1 - 3 und 5, dadurch gekennzeichnet, daß der Austrag als Überlaufwehr (9) ausgebildet ist.

7.) Vorrichtung nach Anspruch 1 - 3 und 5, dadurch gekennzeichnet, daß der Austrag (4) eine Austragswalze mit
darunter angeordnetem Sieb (10) aufweist.

8.) Vorrichtung nach Anspruch 7, dadurch gekennzeichnet,
daß die Schaufeln der Austragswalze gelocht sind.

0090372

9.) Vorrichtung nach Anspruch 1 - 8, dadurch gekennzeichnet, daß der Bodenablauf mit einem Schwanenhalsaustrag versehen ist.

10.) Vorrichtung nach Anspruch 1 - 9, dadurch gekennzeichnet, daß der Frischwassereintrag im Bereich des Austrags (4) angeordnet ist.

11.) Verfahren zum Reinigen von Granulaten oder Kunststoff-Folienschnitzeln durch mechanisches Einwirken auf die Teilchen in einer Waschflüssigkeit, dadurch gekennzeichnet, daß die Teilchen in einer Zone hoher Stoffkonzentration mit Hilfe von schnellaufenden Rührern mit hoher mechanischer Energie beaufschlagt werden, wonach sie rasch in eine Zone geringer Stoffkonzentration überführt und an deren Oberfläche abgezogen werden.

12.) Verfahren nach Anspruch 11, dadurch gekennzeichnet, daß die Teilchen beim Übergang von der Zone hoher Stoffkonzentration in die Zone niedriger Stoffkonzentration durch Querschnittsverengung des Strömungsweges beschleunigt werden.

13.) Verfahren nach Anspruch 11 und 12, dadurch gekennzeichnet, daß die frische Waschflüssigkeit im Gegenstrom zu den gereinigten Teilchen geführt wird.

0090372

14.) Verfahren nach Anspruch 11 - 13, dadurch gekennzeichnet, daß der Querschnitt zuwischen den Zonen über die Leistungsaufnahme des Rührwerkmotors mit Hilfe eines verstellbaren Schiebers geregelt wird.

15.) Verfahren nach Anspruch 11 - 14, dadurch gekennzeichnet, daß über das Rührwerk die Teilchen begast werden.

| | EUROPÄISCHER RECHERCHENBERICHT | 0090372 |
|---|---|---|
| Europäisches Patentamt | | Nummer der Anmeldung |
| | | EP 83 10 2989 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 727 181 (BUCKAU) | | B 08 B 3/04 B 29 C 29/00 |
| | ----- | | |
| | | | RECHERCHIERTE SACHGEBIETE (Int. Cl. 3) |
| | | | B 08 B B 29 C |

Der vorliegende Recherchenbericht wurde für alle Patentansprüche erstellt.

| Recherchenort DEN HAAG | Abschlußdatum der Recherche 13-06-1983 | Prüfer VAN BOGAERT J.A.M.M. |
|---|---|---|